# EUROPÄISCHE PATENTSCHRIFT

(11) **EP 1 448 719 B1**
(45) Veröffentlichungstag und Bekanntmachung des Hinweises auf die Patenterteilung: **12.09.2007**
(21) Anmeldenummer: 02804150.7
(22) Anmeldetag: 28.11.2002
(51) Int. Cl.: C09D 1/00, C09C 3/08, B05B 5/00, B05D 5/00

(54) **BESCHICHTUNG ZUR DAUERHAFTEN HYDROPHILIERUNG VON OBERFLäCHEN UND DEREN VERWENDUNG**
COATING FOR PERMANENTLY HYDROPHILIZING SURFACES AND THE USE THEREOF
ENDUCTION POUR RENDRE DES SURFACES DURABLEMENT HYDROPHILES ET UTILISATION ASSOCIEE

(30) Priorität: 29.11.2001 DE 10158437
(43) Veröffentlichungstag der Anmeldung: 25.08.2004
(73) Patentinhaber: Nano-X GmbH, 66130 Saarbrücken (DE); Genthe-X-Coatings Gmbh, 38642 Goslar (DE)
(72) Erfinder: SEPEUR, Stefan, 66787 Wadgassen (DE); DRÄGER, Nicole, 66646 Marpingen (DE); GOEDICKE, Stefan, 66540 Neunkirchen (DE); THURN, Carolin, 66787 Wadgassen (DE); HAACKE, Florian, Wigo, 38640 Goslar (DE)
(74) Vertreter: Vièl, Christof
(86) Internationale Anmeldenummer: PCT/DE2002/004371
(87) Internationale Veröffentlichungsnummer: WO 2003/048258

(56) Entgegenhaltungen:
- EP-A- 0 391 226
- EP-A- 0 869 156
- EP-A- 0 909 784
- EP-A- 0 989 166
- EP-A- 1 094 090
- DE-A- 19 746 885
- US-A- 4 830 672
- US-A- 5 199 979
- US-A- 5 723 181
- US-A- 5 753 373
- US-A- 5 908 663
- US-A- 5 997 621
- US-A- 6 136 083
- US-A- 6 165 256
- US-B1- 6 296 943

## Beschreibung

Die Erfindung betrifft ein Verfahren zur Herstellung einer Beschichtung zur dauerhaften Hydrophilierung von Oberflächen und deren Verwendung.

Zur dauerhaften Hydrophilierung von Oberflächen sind verschiedene Materialansätze bekannt.

Ein solcher Ansatz ist die Verwendung von hydrophilen Polymeren als Beschichtungsmaterial für Glas- bzw. Kunststoffoberflächen (z.B. Skibrillen). Es sind transparente Antibeschlagbeschichtungen für Polycarbonatoberflächen auf der Basis von Polyurethanen bekannt. Polyurethane können durch polare Strukturen mit relativ hohen Oberflächenenergien ausgestattet werden. Daraus resultiert eine relativ hohe Wasseraufnahme des Polymers, was zu adsorbierten Wasserschichten an der Oberfläche bzw. hydrophilem Verhalten führt. Die hohe Wasseraufnahme hydrophiler Polymere führt bei Langzeiteinwirkung von Wasser häufig zur Enthaftung der Schichten.

Aus der WO 87/01111 ist ein Beschichtungsmaterial mit Antibeschlageigenschaften bekannt, wobei in einer während des Aushärtens aufgebauten Polyurethanmatrix als zusätzlich hydrophilierende Komponente Polyethylenglykol oder Ethylenglykol eingebaut wird. Aus der angegebenen Wasseraufnahme des Materials von 45 % kann auf Enthaftung der Schicht bei Langzeitexposition mit Wasser geschlossen werden.

In der JP 3247672 A1 wird ein UV-härtendes Antibeschlagbeschichtungsmaterial für Polymethacrylatoberflächen auf Basis eines Copolymers von Hydroxyethylmethacrylat und Methylmethacrylat, Trimethylolpropantriacrylat sowie Methylcellulose und eines UV-Radikalstarters beschrieben. Nach Aushärtung sind die hydrophilen Komponenten (OH-Gruppe von Hydroxylmethacrylat, Methylcellulose) aufgrund thermodynamischer Kräfte an der Oberfläche und die unpolaren Komponenten an der unpolaren PMMA-Oberfläche angereichert.

Aus der EP 339 909 A1 ist ein Copolymer bekannt, das aus einem Polyol-Diepoxid, Hydroxyethylmethacrylat und Methylcellulose hergestellt ist. Derartige Schichten beschlagen bei 100 % Luftfeuchtigkeit / 60°C innerhalb von 10 Stunden nicht. Langzeitbeständigkeiten dieser Oberflächen werden allerdings nicht beschrieben.

Ein weiteres wichtiges Anwendungsgebiet der obengenannten hydrophilen Beschichtungsmaterialien ist die Druckindustrie. Hydrophobe Oberflächen werden durch die Beschichtungen hydrophilisiert und sind dadurch mit polaren Druckfarben bedruckbar bzw. können mittels der Tintenstrahltechnik aufgebracht werden.

Des weiteren werden Bulkmaterialien mit hydrophilen Strukturelementen zur Herstellung von Kontaktlinsen verwendet, für die eine dauerhafte Benetzung mit der Augenflüssigkeit bzw. eine hohe Wasseraufnahme gefordert wird.

Zur Verbesserung der Haftung hydrophiler Beschichtungsmaterialien werden Haftvermittler auf Basis von Silanen verwendet. Beispielsweise ist aus der JP 62129367 A1 ein Beschichtungsmaterial auf Basis von Acrylsäure, Polyethylenglycolmonomethylacrylat, Sorbitolpolyglycidäther mit Silankopplungsreagenzien als Antibeschlagbeschichtungsmaterial für Kunststoffe und Glas bekannt. Die transparenten Schichten zeigen nach Auslagerung mit Wasser bei 60 °C ein deutliches Quellen bzw. eine Erweichung des Materials. In der JP 54119599 A1 wird ein Hydroxyethylacrylat/Hydroxyethylmethacrylat/Vinylpyrrolidon-Copolymer unter Verwendung von Silanhaftvermittlern (Aminoalkyl-, Methacryl-, Vinyl-, bzw. mercaptofunktionalisierte Alkoxysilane) zur Herstellung hydrophiler Kunststoffoberflächen beschrieben. Vergleichbare Materialien mit hydrophilen Polyoxyethylenstrukturen in einer Methacrylat/Hydroxyethylmethacrylatmatrix mit methacrylmodifizierten Trialkoxysilanen als Haftvermittler werden in der JP 2169651 als hydrophile Beschichtungsmaterialien für Kunststoffolien für Anwendungen im landwirtschaftlichen Bereich beschrieben. Auf mechanische Eigenschaften bzw. Kratz- und Abriebbeständigkeiten wird dort nicht eingegangen.

Ein weiterer prinzipieller Ansatz zur Hydrophilisierung von Oberflächen ist der Einbau von ionischen bzw. nichtionischen Tensiden in Beschichtungsmaterialien mit polaren Strukturelementen. Einerseits können insbesondere ionische Tenside an entsprechende

Polymere chemisch gebunden werden und erzeugen durch den "hydrophilen Kopf" weitere hochpolare (hydrophile) Zentren, andererseits können nichtionische Tenside eingebaut werden, die sich aufgrund thermodynamischer Gleichgewichte an der Grenzfläche zur Luft anreichern, wobei extrem hohe Konzentrationen hydrophiler Endgruppen der Tenside an der Schichtoberfläche angereichert sind und dadurch eine hohe Hydrophilie realisiert wird (DE 20 68 494 A1). Im Falle der Verwendung von nichtionischen Tensiden ist eine Diffusionsfähigkeit dieser Komponenten gegeben, so daß bei Kontakt mit Wasser die Tenside aus der Oberfläche herausgelöst werden, wobei an der Oberfläche adsorbierte hydrophobe Partikel mit den Tensiden weggeschwemmt werden. Durch Diffusion werden diffusible Tensidmoleküle an die Oberfläche nachgeliefert, so daß dadurch eine "selbsterneuernde" hydrophile Oberfläche entsteht, bis das Reservoir an diffusiblen Tensidmolekülen aus dem Bulk verbraucht ist. In der DE 20 68 494 A1 werden Beschichtungsmaterialien aus difunktionellen aliphatischen Isocyanaten (z.B. 1,6-Hexa-methylendiisocyanat, 2, 4-Timethyl-1,6-Hexamethylendiisocyanat, 3-Isocyanatomethyl-3,5,5-Trimethylcyclohexylisocyanat, etc.) sowie polyfunktionellen Polyalkoholen (Polyesterpolyalkohole, Polyetherpolyalkohole, etc.) und ionischen bzw. nichtionischen Tensiden (ethoxylierte Fettalkohole) beschrieben, wobei nichtanionische Tenside aufgrund ihrer Diffusibilität bevorzugt werden. Derartige Mischungen werden insbesondere auf transparente Kunststoffe mit üblichen Beschichtungstechniken aufgetragen und anschließend thermisch polymerisiert. Zusätzlich besteht die Möglichkeit, die Polymerschichten ohne gelöste Tenside aufzubringen und auszuhärten und anschließend die Tenside in wäßrigen Lösungen bei erhöhter Temperatur (ca. 90°C) einzudiffundieren, wobei dies durch äußeren Druck beschleunigt werden kann. Die hergestellten Schichten auf Polyurethanbasis zeigen Antibeschlageigenschaften (DIN 4646, Teil 8) und haben im Vergleich zu üblich transparenten verbesserte Kratz- und Abriebbeständigkeiten der Oberfläche (Streulicht ca. 4 % nach 100 Zyklen Taber Abrader), die auf einen "Selbstheilungseffekt" (viskoses Fließen unter Last) des elastischen Polymers zurückzuführen ist.

In der DE 21 19 349 A1 wird ein Antibeschlagbeschichtungsmaterial auf Basis von Polyvinylpyrrolidon/Polyvinylacetat/Polyethylenglykol-Copolymeren mit Tensiden auf Fettalkoholäthersulfonsäurebasis beschrieben, das "dauerhafte" Antibeschlagseigenschaften aufweist, wobei beschrieben wird, daß die Schichten gegenüber üblichen Reinigungsmitteln nicht resistent sind.

In der EP 188 419 A1 wird ein transparentes Material, basierend auf Polyvinylpyrrolidon/Polydimethylacrylamid/Polyvinylpyrrolidon-Copolymeren mit polymerisierbaren α-Olefingruppen sowie Polyisocyanatvorstufen und nichtionischen bzw. anionischen Tensiden beschrieben. Die besten Ergebnisse werden durch Verwendung von sowohl anionischen Tensiden, die chemisch während der Polymerisation an das hydrophile Netzwerk angebunden werden, als auch nichtionischen Tensiden, die in der Matrix diffusibel bleiben, erzielt. Für die Beschichtungen werden ausgezeichnete Haftungen auf transparenten Polymeren (Polycarbonatpolyester, PMMA, etc.) beschrieben. Die Beschichtungen beschlagen nicht, wenn sie auf 0 °C abgekühlt und anschließend 100 % Luftfeuchte ausgesetzt werden. Es wird keine Verminderung der Antibeschlagseigenschaften nach 20 Zyklen dieses Tests nachgewiesen.

Aus der EP 219 039 A1 ist ein Antibeschlagbeschichtungsmaterial auf Basis von Hexamethylcyclotrisiloxan und ionischen Tensiden auf Fettalkoholbasis (≥ 50%) in alkoholischen Lösungen, bekannt, wobei der Feststoffgehalt der Beschichtungslösung ≤ 2 % beträgt. Die Schichten werden mit üblichen Beschichtungstechniken aufgetragen und bei Temperaturen zwischen 25 und 50 °C getrocknet. Es wird dort beschrieben, daß nach kurzzeitiger Auslagerung des Substrates bei -10 °C kein Beschlag in feuchter Luft auftritt. Es werden keinerlei Angaben über die Dauerhaftigkeit des Effekts oder mechanische Oberflächeneigenschaften gemacht.

Die EP 1 094 090 A2 beschreibt ein siliziumdioxid-beschichtetes Polyolefinharz und ein Herstellungsverfahren hierfür. Das dort beschriebene Material ist nicht sinterfähig.

Aus der EP 0 391 226 A1 ist ein Verfahren zum Herstellen eines Siliziumdioxidfilms auf einem Substrat bekannt, wobei organischer Farbstoff in den Siliziumdioxidfilm eingebracht wird. Es handelt sich somit ebenfalls um ein Verfahren, bei dem ein Substrat oberflächlich beschichtet wird und nicht um ein homogenes, durchgehend hydrophyliertes Produkt.

Der Stand der Technik zur Herstellung von transparenten hydrophilen Beschichtungsmaterialien läßt sich somit in zwei Grundprinzipien einteilen:
1. Es werden organische Polymere bzw. Copolymere mit polaren Gruppen, wie z.B. COH, COOH, COONH verwendet. Die Schichten werden als Copolymer aufgebracht bzw. als Monomer- bzw. Copolymergemisch nach Aushärtung polymerisiert, wobei die nach Schichtaufbringung thermisch ausgehärteten Materialien aufgrund der höheren Polymerisationsgrade bzw. geringeren Lösungsmittelgehalte bessere mechanische bzw. Langzeitstabilitäten zeigen. Die hohe Konzentration polarer Gruppen in den verwendeten Polymeren (Hydroxyethylacrylsäureester, Hydroxyethylmethacrylsäureester, Polyurethan, Polyethylenglykol, Hydroxyethylcellulose, etc.) führt zu guten Benetzungseigenschaften (geringen Kontaktwinkeln) gegenüber Wasser und hydrophilieren damit die beschichteten Oberflächen. Derartige Schichten wurden insbesondere zur Beschichtung von hydrophoben unpolaren Polymeren entwickelt, die aufgrund des hydrophoben Charakters der Oberfläche sehr stark zum Beschlagen neigen. Diese Oberflächen zeigen zum einen geringe Abriebfestigkeiten, zum anderen wird durch Wasseraufnahme und Quellen das Netzwerk mit der Zeit geschwächt, so daß es zu Quellung und Auflösung bzw. Ablösung der Schichten im Substrat kommt.
2. Durch Einbau von diffusiblen Tensiden in den obengenannten Materialien kann die Hydrophilie weiter erhöht werden, da sich thermodynamisch kontrolliert die hydrophilen Köpfe der Tenside an der Oberfläche anreichern und dadurch prinzipiell eine weitere Verbesserung der hydrophilen Eigenschaften derartiger Materialien ergeben. Beim Waschvorgang derartiger Oberflächen werden adsorbierte hydrophobe Partikel zusammen mit den an der Oberfläche befindlichen Tensiden weggeschwemmt, wobei durch Diffusion aus dem Bulk Tenside an die Oberfläche nachgeliefert werden und dadurch eine selbsterneuernde hydrophile Oberfläche entsteht. Nachteilig ist hierbei die Tatsache, daß nach Verbrauch der Tenside die Wirkung endet, so daß auf diese Weise keine Langzeithydrophilie erreichbar ist.

Zusammenfassend ist festzuhalten, daß alle aus dem Stand der Technik bekannten Systeme mit hydrophilen Oberflächeneigenschaften aufgrund von Quellungs- und Diffusionsprozessen unter Langzeitbedingungen enthaften oder sich auflösen bzw. eingeschränkte Transparenz bzw. zeitlich eingeschränkte Hydrophilie zeigen.

Aufgabe der Erfindung ist es somit, ein Verfahren zur Herstellung einer Beschichtung zur dauerhaften Hydrophilierung von Oberflächen zu schaffen.

Diese Aufgabe wird erfindungsgemäß dadurch gelöst, daß die Beschichtung aus sinterfähigen nanoskaligen Partikeln aus 10 bis 90 % anorganischen Strukturen, 5 bis 70 % hydrophilen Seitenketten sowie 0 - 50 % organischen Seitenketten mit funktionellen Gruppen besteht, wobei die nanoskaligen Partikel eine mittlere Teilchengröße von 2 bis 100 nm, vorzugsweise von 2 bis 30 nm aufweisen, daß die nanoskaligen Partikel in einem Lösungsmittel stabilisiert werden, wobei der pH-Wert dieser Beschichtung zwischen 3 und 10 liegt, daß die Beschichtung auf ein Substrat appliziert und dann gehärtet wird.

Überraschenderweise konnte im Rahmen der Erfindung eine derartige Beschichtung realisiert werden, welche nach einfacher Applikation (Sprüh-, Tauch- oder Flutbeschichtung) und anschließender thermischer Verdichtung sowohl eine sehr gute Benetzbarkeit der Oberfläche durch Wasser (Kontaktwinkel < 30 ° bis zum Antibeschlageffekt) und andererseits eine ausgezeichnete Dauerbeständigkeit aufweist. Beispielsweise wurde die Wasserdampfbeständigkeit unter Autoklavenbedingungen (p=3 bis 4 bar, T=393 K, t=30 min) getestet und ohne Befund bestanden. Die Haftung war bei allen untersuchten Substraten (selbst bei Polyolefinen nach vorheriger Beflammung) sehr gut.

Hierbei ist vorgesehen, daß die anorganischen Strukturen insbesondere Siliciumdioxid oder Zirkoniumoxid sind.

Bevorzugte Ausbildungen der Erfindung bestehen darin, daß die hydrophilen Seitenketten Amino-, Sulfonat-, Sulfat-, Sulfit-, Sulfonamid-, Sulfoxid-, Carboxylat-, Polyol-, Polyether-, Phosphat-, oder Phosphonatgruppen sind.

Es liegt im Rahmen der Erfindung, daß die funktionellen Gruppen der organischen Seitenketten Epoxid-, Acryloxy-, Methacryloxy-, Glycidyloxy-, Allyl-, Vinyl-, Carboxyl-, Mercapto-, Hydroxyl-, Amid- oder Amino-, Isocyano-, Hydroxy- oder Silanolgruppen sind.

Zur Erfindung gehörig ist weiterhin, daß die Nanopartikel in dem Lösungsmittel elektrosterisch oder elektrostatisch stabilisiert werden.

Ebenfalls liegt im Rahmen der Erfindung, daß die Beschichtung durch Sprühen, Fluten oder Tauchen auf das Substrat appliziert wird.

Weiterhin ist erfindungsgemäß vorgesehen, daß die Schichtdicke der Beschichtung zwischen 100 nm und 20 µm, vorzugsweise zwischen 250 nm und 5 µm liegt.

Es ist auch zweckmäßig, daß die Beschichtung nach dem Applizieren thermisch, durch Licht oder mittels Strahlenhärtung gehärtet wird.

Im Rahmen der Erfindung liegt auch die Verwendung einer gemäß dem erfindungsgemäßen Verfahren hergestellten Beschichtung zur Beschichtung von Metallen, Kunststoffen, Keramik, Textil, Leder, Holz, Papier, lackierten Oberflächen und Gläsern als Antibeschlagmittel.

Typische Anwendungen sind hierbei: Schuhe, Kleidungsstücke, Planen, Plakate, Bauelemente (z.B. Sonnenschutzlamellen, Fensterprofile (insbesondere aus PVC), Wintergärten, Glaskuppeln, Fassadenelemente, Dachziegel, Fensterläden, Kamine, Tür- und Fenstergriffe), Telefonzellen, Denkmäler, Satellitenanlagen, Antennen, Brücken, Gebäude (insbesondere Hochhäuser), Blumentöpfe, Gartenmöbel, Gartengeräte, Gartenzwerge, Haltestellenhäuschen, Strommasten, Stromkästen, Dachrinnen, Spielplatzeinrichtungen, Grabsteine, Werbetafeln, Plakate, Küchen und Küchengeräte, Fahrzeuge und Fahrzeugteile (z.B. Fahrzeugspiegel, Fahrzeuglacke, Fahrzeugfelgen, Fahrzeugscheiben, Stoßstangen, Lkw-Planen, Fahrzeugkennzeichen), Verkehrsschilder, Verkehrsspiegel, Fahrräder, Motorräder, Raumfahrzeuge, Flugzeuge und Flugzeugteile, Hubschrauber, Satelliten, Raumanzüge, medizinische Geräte, medizinische Räume und Sanitäreinrichtungen, Kondome, Implantate, Dialysegeräte, Katheter, Endoskope, Schwimmbäder, Zelte, Solaranlagen und - zellen, elektrische und elektronische Bauteile (z.B. Drähte, Kabel, Lampen, Laternen, Meßeinrichtungen), Computerdisplays, optische Linsen oder Maschinenteile.

Die Herstellung der erfindungsgemäßen Beschichtung erfolgt grundsätzlich so, daß zunächst Nanopartikel hergestellt werden, diese in einem Lösungsmittel stabilisiert werden (elektrosterisch oder elektrostatisch), dann auf ein Substrat appliziert werden (beispielsweise durch Sprühen, Fluten, Tauchen) und dann gehärtet werden (thermisch, mit Licht, durch Strahlenhärtung, etc.).

Es entstehen hierbei transparente, hochbeständige Beschichtungen mit durch den Härtungsprozeß untereinander vernetzten Nanopartikeln.

Nachfolgend werden Ausführungsbeispiele der Erfindung beschrieben.

### Ausführungsbeispiel1 :

Zu 444,57g (1 Mol) Sulfobernsteinsäure wird unter Rühren 221,29g (1 Mol) 3-Aminopropyltriethoxysilan zugesetzt und im Siliconbad 5 h auf 120°C erhitzt. Nach dem Abkühlen des Reaktionsgemisches werden 20g der viskosen Flüssigkeit mit 80g (0,38 mol) Tetraethoxysilan versetzt und in 100g Ethylalkohol aufgenommen. Die Lösung wird anschließend mit 13,68g (0,76 mol) einer 0,1 N HCl-Lösung versetzt und über Nacht bei 40°C in einem Wasserbad temperiert. Es resultieren hydrophile Nanopartikel mit reaktiven Endgruppen von ca. 2nm.

Die resultierende Lösung wird mit einem Gemisch von 1/3 Wasser und 2/3 N-Methylpyrrolidon (NMP) auf einen Feststoffgehalt von 5% verdünnt und durch Sprühen auf eine Glasplatte in einer Naßfilmdicke von 10 bis 20µm aufgebracht. Anschließend wird das Substrat bei 150°C für 3h in einem Umlufttrockenschrank verdichtet.

Die resultierende Schicht zeigt einen Kontaktwinkel gegen Wasser von ca. 10° und eine sehr gute langzeitstabile Antibeschlagwirkung.

### Ausführungsbeispiel 2:

Zu 444,57g (1 Mol) Sulfobernsteinsäure wird unter Rühren 221,29g (1 Mol) 3-Aminopropyltriethoxysilan zugesetzt. Daran anschließend wird die Lösung auf 130°C in einem Siliconbad erhitzt. Nach 1 h Reaktionszeit werden der Reaktionslösung unter Rühren 332,93g einer alkalisch stabilisierten wässrigen Kieselsäurelösung vom Typ Levasil 300/30% (pH=10) zugesetzt. Nach 12 h Reaktionszeit wird das Gemisch mit Wasser auf einen Feststoffgehalt von 5 % verdünnt. Es resultieren hydrophile Nanopartikel mit reaktiven Endgruppen von ca. 15 nm. Das System wird auf plasmaaktivierte Polycarbonatplatten durch Fluten appliziert und anschließend bei 130°C für 5 h im Umlufttrockenschrank getrocknet.

Die resultierende Schicht zeigt einen Kontaktwinkel gegen Wasser von ca. 10° und eine sehr gute langzeitstabile Antibeschlagwirkung.

### Ausführungsbeispiel 3:

Zu 600g (1 Mol) Polyethylenglycol 600 werden 123,68g (0,5 Mol) 3-Isocyanatopropyltriethoxysilan gegeben und auf 130°C im Siliconbad nach Zugabe von 0,12g Dibutylzinndilaurat (0,1 Gew.-% bzgl. 3-Isocyanatopropyltriethoxysilan) erhitzt. Zu 50g der resultierenden Lösung (Lösung A) werden unter Rühren 25g (0,12 Mol) Tetraethoxysilan und 33,4g (0,12 Mol) 3-Glycidyloxypropyltriethoxysilan zugesetzt. Nach Zusatz von 15,12g (0,84 mol) einer 0,1 N HCl-Lösung wird das Gemisch 24 h bei Raumtemperatur hydrolisiert und kondensiert. Es resultieren hydrophile Nanopartikel mit reaktiven Endgruppen von ca. 5 nm.

Nach Verdünnen des Gemisches mit Isopropanol im Verhältnis 1:1 und anschließender Sprühapplikation auf eine Glasplatte erfolgt die Verdichtung des Materials bei einer Oberflächentemperatur von max. 200°C unter IR-Strahlern für 10 min.

Die resultierende Schicht zeigt einen Kontaktwinkel gegen Wasser von ca. 10° und eine sehr gute langzeitstabile Antibeschlagwirkung.

### Ausführungsbeispiel 4:

Zu 50 g der in Ausführungsbeispiel 3 beschriebenen Lösung A werden unter Rühren 12,5g (0,05 mol) 3-Methacryloxypropyltrimethoxysilan, 12,5 g einer 20%igen wässrigen CeO₂-Lösung (Fa. Aldrich) und 50g Ethylalkohol zur Homogenisierung der Mischung zugesetzt und 48 h hydrolysiert. Nach Zugabe von 0,375g Irgacure 184 der Fa. Ciba Spezialitäten Chemie (3 Gew.-% bzgl. 3-Methacryloxypropyltrimethoxysilan) wird das Gemisch mittels Sprühen in einer Naßfilmdicke von maximal 30 µm auf einer beflammten Polycarbonatplatte aufgetragen und zunächst thermisch bei 130°C für 10 min im Umlufttrockenschrank getrocknet. Danach erfolgt die photochemische Trocknung mit Hg-Strahlern mit einer Bestrahlungsleistung von 1-2 J/cm².

Die resultierende Schicht zeigt einen Kontaktwinkel gegen Wasser von ca. 10° und eine sehr gute langzeitstabile Antibeschlagwirkung.

## Patentansprüche

1. Verfahren zur Herstellung einer Beschichtung zur dauerhaften Hydrophilierung von Oberflächen, **dadurch gekennzeichnet, daß** die Beschichtung aus sinterfähigen nanoskaligen Partikeln aus 10 bis 90 % anorganischen Strukturen, 5 bis 70 % hydrophilen Seitenketten sowie 0 - 50 % organischen Seitenketten mit funktionellen Gruppen besteht, wobei die nanoskaligen Partikel eine mittlere Teilchengröße von 2 bis 100 nm, vorzugsweise von 2 bis 30 nm aufweisen, daß die nanoskaligen Partikel in einem Lösungsmittel stabilisiert werden, daß die Beschichtungslösung auf ein Substrat appliziert und dann gehärtet wird.

2. Verfahren gemäß Anspruch 1, **dadurch gekennzeichnet, daß** die anorganischen Strukturen Siliciumoxid oder Zirkoniumoxid sind.

3. Verfahren gemäß Anspruch 1, **dadurch gekennzeichnet, daß** die hydrophilen Seitenketten Amino-, Sulfonat-, Sulfat-, Sulfit-, Sulfonamid-, Sulfoxid-, Carboxylat-, Polyol-, Polyether-, Phosphat-, oder Phosphonatgruppen sind.

4. Verfahren gemäß Anspruch 1, **dadurch gekennzeichnet, daß** die funktionellen Gruppen der organischen Seitenketten Epoxid-, Acryloxy-, Methacryloxy-, Glycidyloxy-, Allyl-, Vinyl-, Carboxyl-, Mercapto-, Hydroxyl-, Amid- oder Amino-, Isocyano-, Hydroxy- oder Silanolgruppen sind.

5. Verfahren gemäß Anspruch 1, **dadurch gekennzeichnet, daß** die Nanopartikel in dem Lösungsmittel elektrosterisch oder elektrostatisch stabilisiert werden.

6. Verfahren gemäß Anspruch 1, **dadurch gekennzeichnet, daß** die Beschichtungslösung durch Sprühen, Fluten oder Tauchen auf das Substrat appliziert wird.

7. Verfahren gemäß Anspruch 6, **dadurch gekennzeichnet, daß** die Schichtdicke der Beschichtung zwischen 100 nm und 20 µm, vorzugsweise zwischen 250 nm und 5 µm liegt.

8. Verfahren gemäß einem der Ansprüche 6 oder 7, **dadurch gekennzeichnet, daß** die Beschichtung nach dem Applizieren thermisch, durch Licht oder mittels Strahlenhärtung gehärtet wird.

9. Verwendung einer gemäß den Ansprüchen 1 bis 8 hergestellten Beschichtung closung zur Beschichtung von Metallen, Kunststoffen, Keramik, Textil, Leder, Holz, Papier, lackierten Oberflächen und Gläsern als Antibeschlagmittel.

## Claims

1. A method of manufacturing a coating for permanent hydrophilization of surfaces, **characterised in that** the coating consists of sinterable nano-scale particles made up of 10 to 90 % inorganic structures, 5 to 70 % hydrophilic side chains and 0-50 % organic side chains having functional groups, said nano-scale particles having an average particle size of 2 to 100 nm, preferably 2 to 30 nm, that the nano-scale particles are stabilised in a solvent and that the coating solution is applied to a substrate and then cured..

2. The method according to claim 1, **characterised in that** the inorganic structures are silicon dioxide or zirconium oxide.

3. The method according to claim 1, **characterised in that** the hydrophilic side chains are amino, sulfonate, sulfate, sulfite, sulfonamide, sulfoxide, carboxylate, polyol, polyether, phosphate or phosphonate groups.

4. The method according to claim 1, **characterised in that** the functional groups of the organic side chains are epoxy, acryloxy, methacryloxy, glycidyloxy, allyl, vinyl, carboxyl, mercapto, hydroxyl, amide or amino, isocyano, hydroxy or silanol groups.

5. The method according to claim 1, **characterised in that** the nanoparticles are stabilised electrosterically or electrostatically in the solvent.

6. The method according to claim 1, **characterised in that** the coating solution is applied to the substrate by means of spraying, flow-coating or dipping.

7. The method according to claim 6, **characterised in that** the layer thickness of the coating is between 100 nm and 20 µm, preferably between 250 nm and 5 µm.

8. The method according to one of the claims 6 or 7, **characterised in that** after it has been applied, the coating is cured thermally, with light or by means of radiation.

9. Use of a coating solution manufactured according to the claims 1 to 8 for coating metals, plastics, ceramics, textiles, leather, wood, paper, varnished surfaces, and glass, as an anti-fog agent.

## Revendications

1. Procédé pour la fabrication d'un revêtement pour rendre des surfaces durablement hydrophiles, **caractérisé en ce que** le revêtement se compose de particules nanométriques capables de se fritter à base 10 à 90 % de structures minérales, 5 à 70 % de chaînes latérales hydrophiles ainsi que 0 à 50 % de chaînes latérales organiques ayant des groupes fonctionnels, les particules nanométriques ayant une taille particulaire moyenne comprise entre 2 et 100 nm, de préférence entre 2 et 30 nm, **en ce que** les particules nanométriques sont stabilisées dans un solvant, **en ce que** la solution de revêtement est appliquée sur un substrat puis durcie.

2. Procédé selon la revendication 1, **caractérisé en ce que** les structures minérales sont de l'oxyde de silicium ou de l'oxyde de zirconium.

3. Procédé selon la revendication 1, **caractérisé en ce que** les chaînes latérales hydrophiles sont des groupes amino, sulfonate, sulfate, sulfite, sulfonamide, sulfoxyde, carboxylate, polyol, polyéther, phosphate ou phosphonate.

4. Procédé selon la revendication 1, **caractérisé en ce que** les groupes fonctionnels des chaînes latérales organiques sont des groupes époxyde, acryloxy, méthacryloxy, glycidyloxy, allyle, vinyle, carboxyl, mercapto, hydroxyl, amide ou amino, isocyano, hydroxy ou silanol.

5. Procédé selon la revendication 1, **caractérisé en ce que** les particules nanométriques sont stabilisées dans le solvant par voie électrostérique ou électrostatique.

6. Procédé selon la revendication 1, **caractérisé en ce que** la solution d'revêtement est appliquée sur le substrat par pulvérisation, coulage ou immersion.

7. Procédé selon la revendication 6, **caractérisé en ce que** l'épaisseur du revêtement est comprise entre 100 nm et 20 µm, de préférence entre 250 nm et 5 µm.

8. Procédé selon la revendication 6 ou 7, **caractérisé en ce que** le revêtement, après l'application, est durcie par voie thermique, par de la lumière ou par radiodurcissement.

9. Utilisation d'une solution de revêtement fabriquée selon l'une des revendications 1 à 8 pour le revêtement de métaux, de matières plastiques, de céramiques, de textiles, de cuirs, de bois, de papiers, de surfaces vernies et de verres en tant que moyens anti-condensation.
